**Europäisches Patentamt**

**European Patent Office**

**Office européen des brevets**

(11) Numéro de publication : **0 170 575**
**B1**

(12) **FASCICULE DE BREVET EUROPÉEN**

(45) Date de publication du fascicule du brevet :
**19.10.88**

(51) Int. Cl.⁴ : **G 01 F 1/68**

(21) Numéro de dépôt : **85401365.3**

(22) Date de dépôt : **05.07.85**

(54) **Capteur de débit de fluide à point de transition thermique.**

(30) Priorité : **10.07.84 FR 8410926**

(43) Date de publication de la demande :
**05.02.86 Bulletin 86/06**

(45) Mention de la délivrance du brevet :
**19.10.88 Bulletin 88/42**

(84) Etats contractants désignés :
**DE GB IT**

(56) Documents cités :
**DE-A- 1 665 309**
**DE-A- 2 013 483**
**DE-A- 2 444 511**
**DE-A- 2 634 932**
**US-A- 4 043 195**
**IBM TECHNICAL DISCLOSURE BULLETIN, vol. 22, no. 8A, janvier 1980, pages 3290-3292, Armonk, US; C.A. BISHOP et al.: "Digital hot-film anemometer for aspirated ink jet printers"**

(73) Titulaire : **REGIE NATIONALE DES USINES RENAULT Boîte postale 103 8-10 avenue Emile Zola F-92109 Boulogne-Billancourt (FR)**

(72) Inventeur : **Lombard, Claude**
**60, rue Corneille**
**F-78150 Le Chesnay (FR)**
Inventeur : **Warenghem, Michel**
**8, rue Abbé Saint Pierre**
**F-92150 Suresnes (FR)**
Inventeur : **Fauconnet, Jean François**
**84, rue Voltaire**
**F-92500 Rueil Malmaison (FR)**

(74) Mandataire : **Colas, Jean-Pierre et al**
**Cabinet de Boisse 37, avenue Franklin D. Roosevelt**
**F-75008 Paris (FR)**

## Description

Les capteurs thermiques sont utilisés depuis très longtemps pour la mesure du débit massique des fluides. Le fluide à mesurer est mis en contact avec une paroi chauffée servant d'élément de mesure. Plus le débit augmente, plus la quantité d'énergie emportée par le fluide est grande, entraînant un abaissement de la température de surface de la paroi.

Le document DE-A-2 444 511 décrit un tel capteur du type comprenant un élément sensible de type thermistance disposé dans le courant de fluide, au moins une source d'alimentation électrique de l'élément sensible, un circuit électronique à boucle de rétroaction modifiant dans un sens la tension appliquée à l'élément sensible lorsque celle-ci dépasse une première valeur de seuil, modifiant dans le sens opposé ladite tension lorsque celle-ci diminue au-dessous d'une deuxième valeur de seuil, et produisant à sa sortie un signal rectangulaire caractéristique du débit de fluide et dont l'un des niveaux correspond au temps d'échauffement de l'élément sensible et le niveau opposé à son temps de refroidissement.

La présente invention vise à fournir un capteur du type précité qui permette d'obtenir un signal électrique de sortie en relation sensiblement linéaire avec le débit de fluide mesuré.

A cet effet, l'invention a pour objet un capteur thermique de débit de fluide dans un conduit, comprenant un élément sensible de type thermistance disposé dans le courant de fluide, au moins une source d'alimentation électrique de l'élément sensible, un circuit électronique à boucle de rétroaction modifiant dans un sens la tension appliquée à l'élément sensible lorsque celle-ci dépasse une première valeur de seuil, modifiant dans le sens opposé ladite tension lorsque celle-ci diminue au-dessous d'une deuxième valeur de seuil, et produisant à sa sortie un signal rectangulaire caractéristique du débit de fluide et dont l'un des niveaux correspond au temps d'échauffement de l'élément sensible et le niveau opposé à son temps de refroidissement, caractérisé en ce qu'il comprend au moins un circuit d'élévation au carré du signal rectangulaire, incluant à l'entrée un premier filtre passe-bas, un comparateur-amplificateur dont la période de comparaison est commandée par un signal complémentaire de celui appliqué au premier filtre passe-bas et un deuxième filtre passe-bas à la sortie du comparateur-amplificateur délivrant une tension proportionnelle au carré du rapport cyclique du signal rectangulaire.

L'invention sera maintenant décrite à l'aide des figures annexées.

La figure 1 est une vue en coupe d'un capteur placé dans une conduite.

La figure 2 est la caractéristique de la résistance en fonction de la température de l'élément chauffé.

La figure 3 est le schéma du circuit électronique associé au capteur et fournissant directement des signaux rectangulaires caractéristiques du débit.

La figure 4 montre des signaux obtenus aux sorties A et $\overline{A}$ de la figure 3.

La figure 5 montre le schéma d'une cellule électronique permettant l'élévation au carré du signal A. Trois cellules identiques en série permettent d'obtenir la puissance quatrième.

La figure 6 montre les rapports cycliques t/T des signaux A en fonction du débit de fluide, directement à la sortie du schéma figure 3 puis après élévation au carré et à la puissance quatrième dans le schéma représenté figure 5.

La figure 7 montre l'évolution du temps de chauffe t en fonction du débit.

La figure 8 montre la relation entre fréquence d'oscillation et débit ainsi qu'avec la même fréquence après élévation à la puissance quatrième.

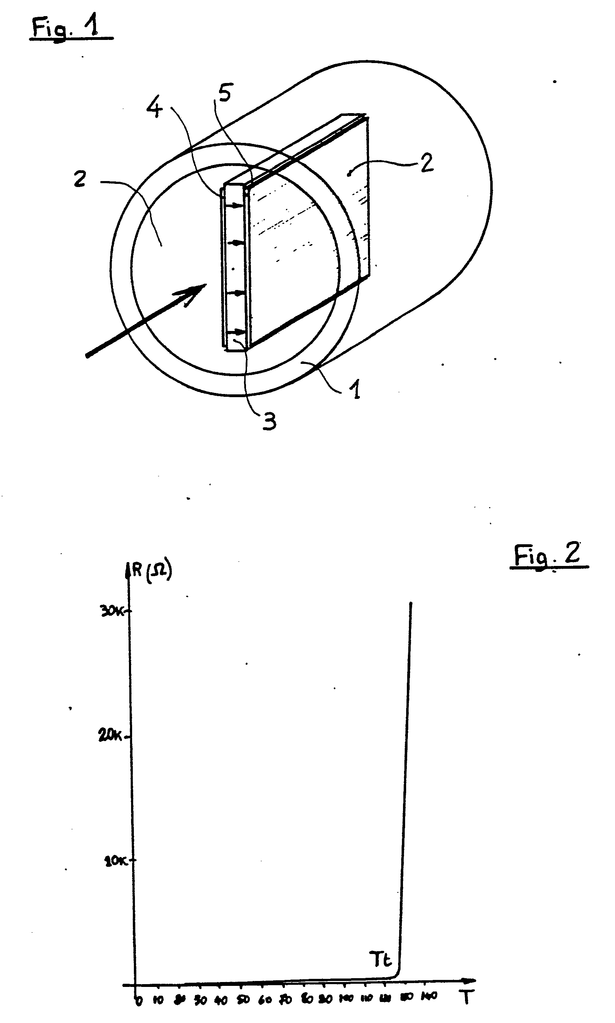

Sur la figure 1, vue en coupe d'une conduite 1 dans laquelle circule un fluide 2, on a représenté un élément chauffant 3 en forme de plaque portant sur ses faces opposées des métallisations fines 4 et 5 servant à uniformiser le passage du courant dans l'élément 3 figuré par des flèches. Cet élément chauffant est très mince et présente une faible inertie thermique. La caractéristique de sa résistance électrique en fonction de la température a été représentée figure 2 : à partir d'une température Tt de transition la résistance électrique croît de plusieurs ordres de grandeur.

On connaît différentes classes de matériaux pouvant présenter une telle caractéristique. Elles peuvent être des céramiques dopées utilisées au voisinage de leur point de Curie. Ce peut être aussi des plastiques irradiés chargés de matières conductrices telles que certains types de noir de carbone, par exemple un matériau polyéthylène modifié (réticulé) chargé d'un matériau conducteur ou un matériau à base d'éthylène comprenant au moins une molécule de fluor et chargé d'un matériau conducteur. La dilatation de réseau des longues molécules greffées entraîne l'absence de contact entre les grains conducteurs d'où l'effet constaté. D'autres structures peuvent donner des effets similaires.

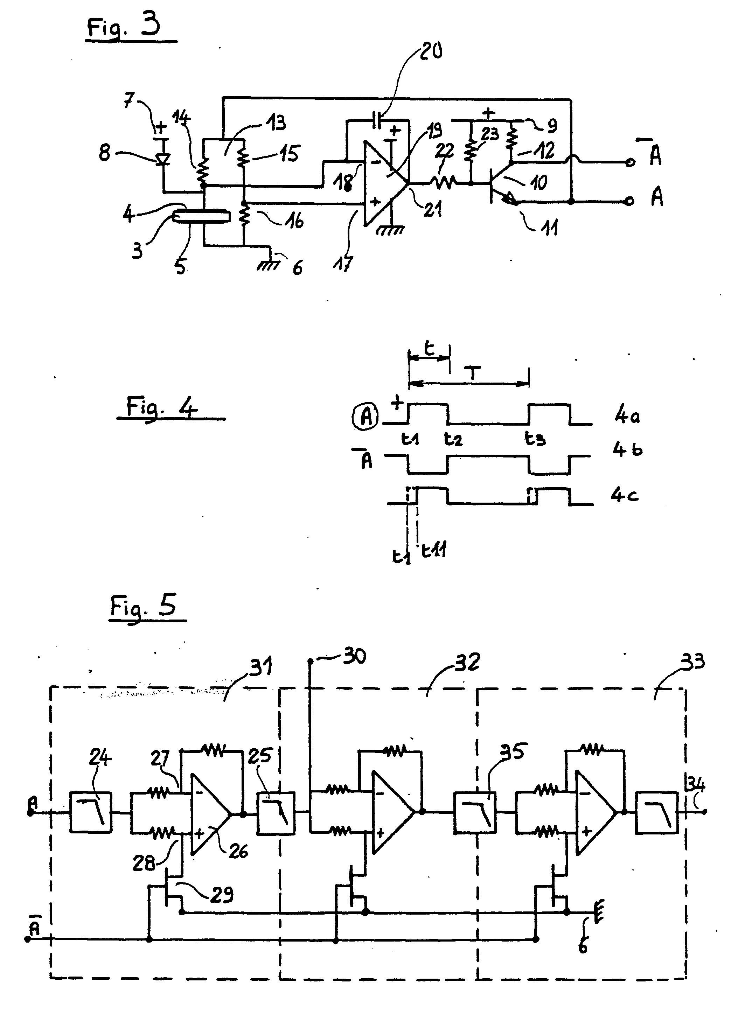

Sur la figure 3 peuvent être distinguées deux sources d'alimentation en tension continue par rapport à la masse commune 6. La première 7 à basse tension et forte intensité est reliée directement à l'élément chauffé 3 par l'intermédiaire d'une diode anti-retour 8 et des métallisations 4 et 5.

L'autre source 9 à tension plus élevée alimente à travers un transistor 10, dont l'émetteur est 11 et le collecteur 12, un pont diviseur 13 dont l'une des branches est constituée par l'élément chauffé 3 et une résistance 14, tandis que l'autre est constituée par deux résistances 15 et 16 dont le point commun est relié à l'entrée non inverseuse 17 d'un amplificateur opérationnel 19 monté en comparateur intégrateur grâce à un condensateur 20, l'entrée inverseuse 18 étant connectée à l'élément chauffé 3. La sortie 21 de l'amplificateur 19 est connectée par deux résistances 22 et 23 à la base du transistor 10. Ce dernier transistor peut être avantageusement remplacé par un amplificateur de puissance à double sortie.

Le fonctionnement est le suivant : au départ, l'élément 3 est très conducteur et la source 7 fait circuler temporairement un très gros courant l'amenant rapidement à un état faiblement conducteur, d'autant que l'élément 3 est également alimenté à travers la résistance 14 par la source 9 et le transistor 10. La tension à l'entrée 18 croissant au-delà de celle de l'entrée 17, qui présente alors une première valeur de seuil V1, le potentiel à la sortie 21 passe à l'état bas, entraînant une baisse de potentiel sur l'émetteur 11, une baisse de courant dans l'élément 3 et une baisse de tension à l'entrée 17 qui prend une deuxième valeur de seuil V2.

L'élément 3 se refroidit alors, la tension en 18 diminue et, lorsqu'elle passe en dessous de la deuxième valeur de seuil V2, il y a passage de la sortie 21 à l'état haut et un nouveau cycle d'échauffement de l'élément sensible 3 se reproduit.

Grâce au condensateur 20, l'ensemble se conduit comme un circuit oscillant stable et l'on obtient sur la sortie A la courbe 4 de la figure 4 tandis qu'au point $\overline{A}$ on recueille le complément du signal représenté en 4b.

La durée t du signal allant de t1 à t2 représente le temps d'échauffement tandis que celle allant de t2 à t3 représente le temps de refroidissement au cours d'une période T du signal rectangulaire.

La courbe 4c représente le même signal auquel on a retranché un temps constant de t1 à t11.

Le signal issu des sorties A et $\overline{A}$ est appliqué aux entrées correspondantes de la figure 5 qui comprend deux filtres passe-bas 24 et 25 de part et d'autre d'un comparateur amplificateur à gain défini 26 recevant sur ses deux entrées 27 et 28 le signal sortant du filtre passe-bas 24, l'entrée 28 non inverseuse pouvant être court-circuitée au potentiel commun 6 par un transistor à effet de champ 29 dont la porte est commandée par le signal complémentaire $\overline{A}$.

En intégrant dans le filtre 24 le signal A, puis en appliquant à nouveau le rapport cyclique t/T dans le comparateur-amplificateur 26 on dispose à la sortie 30 d'un signal intégré dans le deuxième filtre passe-bas 25. Ce signal intégré est une image du carré du rapport cyclique t/T.

La mise en série de deux cellules supplémentaires 32 et 33 identiques à la première cellule 31 permet d'obtenir à la sortie 34 un signal image de la puissance quatrième du rapport cyclique t/T.

Les filtres passe-bas 25 et 35 intermédiaires entre deux cellules jouent à la fois le rôle de filtre d'entrée et de filtre de sortie.

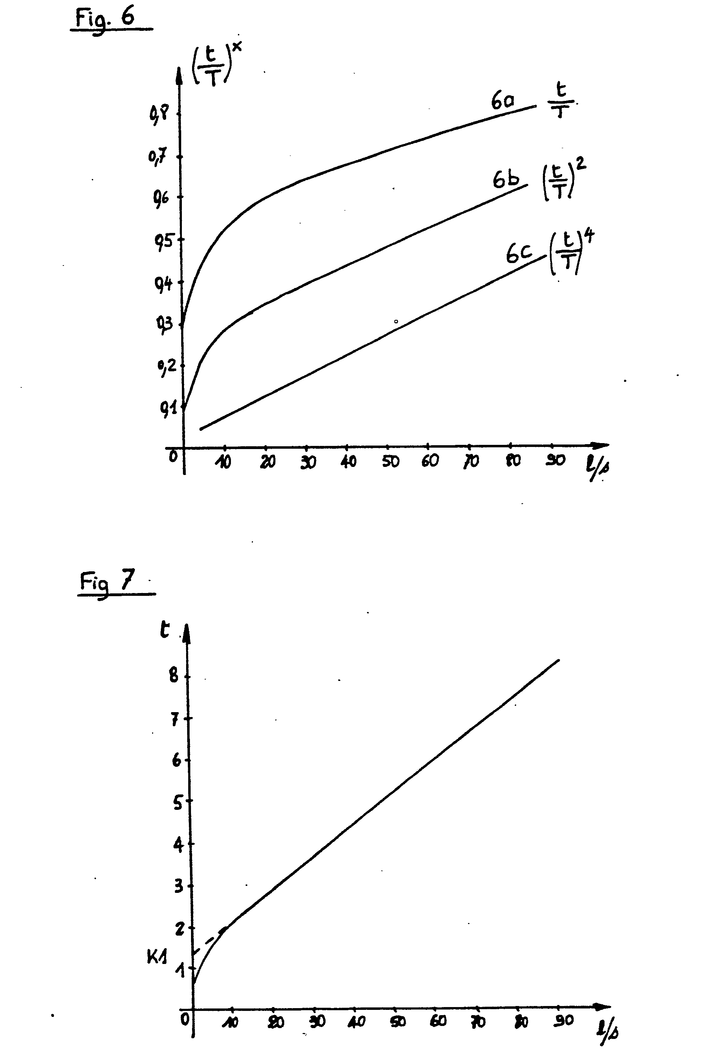

La courbe 6a de la figure 6 montre l'évolution du rapport t/T en fonction du débit de fluide, tandis que la courbe 6b montre ce rapport au carré et la figure 6c le même rapport à la puissance 4. On constate que cette courbe 6c est linéaire conformément à la loi de King. L'élévation au carré, courbe 6b, conduit à une courbe déjà linéaire à partir de 10 % du débit ce qui peut suffire dans un certain nombre de cas.

La courbe 7 montre l'intégrale du temps d'échauffement t en fonction du débit, qui est assez similaire à la courbe 6b, sans même faire une élévation au carré. La courbe n'a cette allure que si la tension d'alimentation 9 est ajustée à une certaine valeur.

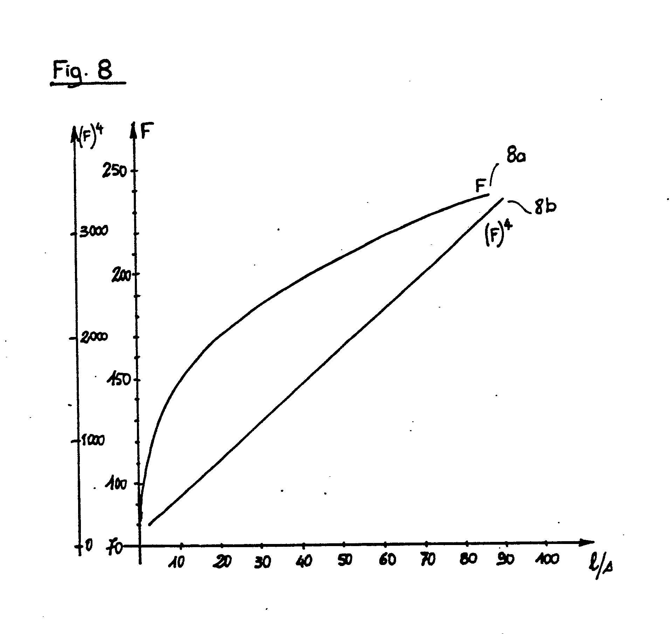

La courbe 8a de la figure 8 montre la variation de fréquence d'oscillation du signal rectangulaire A ou $\overline{A}$ en fonction du débit. La courbe 8b montre cette fréquence après élévation à la puissance quatrième. L'utilisation d'une fréquence peut présenter des avantages pour l'exploitation du signal avec certains types de calculateurs.

Le dispositif décrit à l'aide des figures précédentes et qui fait appel à des matériaux peu coûteux et à une électronique simple, conduit à un dispositif industriel nouveau dont les signaux sont facilement exploitables.

En particulier, selon la figure 7, on voit qu'il suffit de retrancher un temps fixe K1 par un monostable au temps d'échauffement t pour obtenir une loi du temps d'échauffement en fonction du débit linéaire et ayant pratiquement son zéro décalé en K1. Cette méthode peut être utilisée si le débit à mesurer n'est jamais faible. Le temps K1 est celui compris entre les instants t1 et t11, courbe 4c. Avec ou sans élévation à la puissance quatrième, les temps d'échauffement entre t1 et t2 peuvent être additionnés dans un calculateur analogique ou numérique pour obtenir un signal représentatif du débit moyen pendant une période donnée.

Les fréquences obtenues avec des éléments chauffés à base de polyéthylène et une tension d'alimentation d'au moins d'une dizaine de volts sont de l'ordre de quelques dizaines de Hertz à quelques kiloHertz dépendant du matériau et de son épaisseur. Les transitions entre les états hauts et bas des signaux A et $\overline{A}$ sont très rapides. Elles peuvent être inférieures à la microseconde.

Ce capteur thermique peut être notamment utilisé pour le contrôle du débit d'air à l'admission d'un moteur à combustion interne.

Le cas échéant, une sonde d'analyse des gaz d'échappement permettrait de faire une correction lente des variations éventuelles de caractéristiques du capteur.

Les moyens de correction de température nécessaires pour ce type d'application n'ont pas été représentés. Cette correction peut être effectuée à partir d'une sonde de température située en amont de l'élément chauffé 3 et agir sur un point quelconque du schéma électronique ainsi qu'il est usuel pour les capteurs thermiques ne présentant pas de transition brusque de résistance électrique.

## Revendications

1. Capteur thermique de débit de fluide dans un conduit, comprenant un élément sensible de type thermistance disposé dans le courant de fluide, au moins une source d'alimentation électrique de l'élément sensible, un circuit électronique à boucle de rétroaction modifiant dans un sens la tension appliquée à l'élément sensible lorsque celle-ci dépasse une première valeur de seuil, modifiant dans le sens opposé ladite tension lorsque celle-ci diminue au-dessous d'une deuxième valeur de seuil, et produisant à sa sortie un signal rectangulaire caractéristique du débit de fluide et dont l'un des niveaux correspond au temps d'échauffement de l'élément sensible et le niveau opposé à son temps de refroidissement, caractérisé en ce qu'il comprend au moins un circuit (24, 25, 26) d'élévation au carré du signal rectangulaire (A), incluant à l'entrée un premier filtre passe-bas (24), un comparateur-amplificateur (26) dont la période de comparaison est commandée par un signal complémentaire (A̅) de celui appliqué au premier filtre passe-bas et un deuxième filtre passe-bas (25) à la sortie du comparateur-amplificateur (26) délivrant une tension proportionnelle au carré du rapport cyclique (t/T) du signal rectangulaire (A).

2. Capteur thermique selon la revendication 1, caractérisé en ce qu'il comprend trois circuits (31, 32, 33) d'élévation au carré disposés en série pour élever le signal rectangulaire à la puissance quatre.

3. Capteur thermique selon l'une quelconque des revendications 1 et 2, caractérisé en ce qu'il comprend au moins un circuit monostable à temps constant annulant une partie de l'intégrale du temps de chauffe de l'élément sensible.

4. Capteur thermique selon l'une quelconque des revendications 1 à 3, caractérisé en ce que la thermistance (3) est du type à coefficient de température positif présentant une température de transition et en ce que ledit capteur comprend une deuxième alimentation (7) de forte puissance, de tension plus basse que la première et connectée à l'élément sensible à travers une diode antiretour (8), lesdites sources étant aptes à porter la température de l'élément sensible (3) au-delà de sa température de transition.

## Claims

1. Thermal pick-up for a fluid flow in a conduit, comprising a sensitive element of the thermistor type disposed in the fluid current, at least one electrical power supply for the sensitive element, an electronic circuit with a feedback loop modifying in one direction the voltage applied to the sensitive element when that voltage exceeds a first threshold value, modifying the said voltage in the opposite direction when that voltage falls below a second threshold value, and producing at its output a rectangular signal characteristic of the fluid flow and one of the levels of which corresponds to the heating time of the sensitive element and the opposite level to its cooling time, characterized in that it comprises at least one circuit (24, 25, 26) for squaring the rectangular signal (A), including at the input a first low-pass filter (24), a comparator-amplifier (26), the period of comparison of which is controlled by a signal (A̅) complementary to that applied to the first low-pass filter and a second low-pass filter (25) at the output of the comparator-amplifier (26) delivering a voltage proportional to the square of the cyclic ratio (t/T) of the rectangular signal (A).

2. Thermal pick-up according to Claim 1, characterized in that it comprises three squaring circuits (31, 32, 33) disposed in series to raise the rectangular signal to the fourth power.

3. Thermal pick-up according to either of Claims 1 and 2, characterized in that it comprises at least one constant-time monostable circuit cancelling a part of the integral of the heating time of the sensitive element.

4. Thermal pick-up according to any one of claims 1 to 3, characterized in that the thermistor (3) is of the type having a positive temperature coefficient, exhibiting a transition temperature, and in that the said pick-up comprises a second power supply (7) of high power, of lower voltage than the first and connected to the sensitive element via ·a non-return diode (8), the said supplies being capable of bringing the temperature of the sensitive element (3) beyond its transition temperature.

## Patentansprüche

1. Thermische Meßzelle für den Durchfluß einer Flüssigkeit in einer Leitung, mit einem Fühlerelement der Art eines Thermistors, das in dem Flüssigkeitsstrom angeordnet ist, mit mindestens einer elektrischen Spannungsquelle für das Fühlerelement und mit einem elektronischen Stromkreis, der zu einer Rückkoppelungsschleife geschaltet ist und in einem Sinne die an das Fühlerelement angelegte Spannung modifiziert, wenn diese einen ersten Schwellenwert überschreitet, sowie die genannte Spannung im entgegengesetzten Sinne modifiziert, wenn diese unter einen zweiten Schwellenwert absinkt, und an seinem Ausgang ein rechtwinkliges Signal erzeugt, das für den Flüssigkeitsdurchfluß charakteristisch ist und wo eines der Niveaus der Aufheizzeit des Fühlerelements und das entgegengesetzte Niveau seiner Abkühlzeit entspricht, dadurch gekennzeichnet, daß sie mindestens einen Stromkreis (24, 25, 26) zum Anheben des Vierecks des rechteckigen Signals (A) aufweist und dabei am Eingang ein erstes Tiefpaßfilter (24), einen Vergleicher-Verstärker (26), bei dem die Vergleichsperiode durch ein von diesem auf das erste Tiefpaßfilter gelegtes komplementäres Signal (A̅) geregelt wird, und ein zweites Tiefpaßfilter (25) am Ausgang des Vergleicher-Verstärkers (26) vorgesehen sind und eine dem Viereck des zyklischen Verhältnisses (t/T) des rechtwinkligen Signals (A) proportionale Spannung abgegeben wird.

2. Thermische Meßzelle nach Anspruch 1, dadurch gekennzeichnet, daß sie drei Stromkreise (31, 32, 33) zum Anheben des Vierecks aufweist, die in Reihe geschaltet sind, um das rechtwinklige Signal in die vierte Potenz anzuheben.

3. Thermische Meßzelle nach einem der Ansprüche 1 und 2, dadurch gekennzeichnet, daß sie mindestens einen monostabilen Stromkreis mit Zeitkonstante, der im Gleichgewicht mit einem Teil des Integrals der Heizzeit des Fühlerelements steht, aufweist.

4. Thermische Meßzelle nach einem der Ansprüche 1 bis 3, dadurch gekennzeichnet, daß der Thermistor (3) einen positiven Temperaturkoeffizienten aufweist, der eine Übergangstemperatur hat, sowie die genannte Meßzelle eine zweite Spannungsquelle (7) mit einer höheren Leistung hat, deren Spannung unter jener der ersten Spannungsquelle liegt und die über eine Rückstromsicherungsdiode (8) mit dem Fühlerelement verbunden ist, wobei diese Spannungsquellen so eingerichtet sind, daß die Temperatur des Fühlerelements (3) über ihre Übergangstemperatur hinausgeführt wird.

<u>Fig. 1</u>

<u>Fig. 2</u>

## Fig. 3

## Fig. 4

## Fig. 5

Fig. 6

Fig 7

3

Fig. 8